# EUROPÄISCHE PATENTANMELDUNG

(11) **EP 2 377 704 A1**
(43) Veröffentlichungstag der Anmeldung: **19.10.2011**
(21) Anmeldenummer: 11162653.7
(22) Anmeldetag: 15.04.2011
(51) Int. Cl.: B60J 5/04, B29C 45/16

(54) **Türstrukturmodul**

(30) Priorität: 15.04.2010 EP 10160061
(71) Anmelder: LANXESS Deutschland GmbH, 51369 Leverkusen (DE)
(72) Erfinder: Dajek, Ulrich, 51375, Leverkusen (DE); Zimnol, Ralf, 51491, Overath (DE)
(74) Vertreter: Deblon, Jörg-Stephan

(57) **Zusammenfassung**

Die vorliegende Erfindung betrifft ein Türstrukturmodul, bevorzugt ein Türstrukturmodul für ein Kraftfahrzeug, besonders bevorzugt eine Kraftfahrzeugtür oder eine Kraftfahrzeug -Heckklappe in Metall-Kunststoff-Verbundbauweise (Hybridtechnik) indem wenigstens ein Blechprofil mit wenigstens zwei verschiedenen Kunststoffelementen zusammengefügt wird wobei die beiden Kunststoffelemente aus unterschiedlichen Kunststoffmaterialien bestehen die nach dem Bi-Injektionsverfahren zeitgleich verspritzt werden wodurch deren Schmelzefronten beim Aufeinandertreffen miteinander verschmelzen und gleichzeitig mit dem Blechprofil oder den Blechprofilen einen festen Verbund eingehen.

## Beschreibung

Die vorliegende Erfindung betrifft ein Türstrukturmodul, bevorzugt ein Türstrukturmodul für ein Kraftfahrzeug, besonders bevorzugt eine Kraftfahrzeugtür oder eine Kraftfahrzeug -Heckklappe in Metall-Kunststoff-Verbundbauweise (Hybridtechnik) indem wenigstens ein Blechprofil mit wenigstens zwei verschiedenen Kunststoffelementen zusammengefügt wird wobei die beiden Kunststoffelemente aus unterschiedlichen Kunststoffmaterialien bestehen die nach dem Bi-Injektionsverfahren zeitgleich verspritzt werden wodurch deren Schmelzefronten beim Aufeinandertreffen miteinander verschmelzen und gleichzeitig mit dem Blechprofil oder den Blechprofilen einen festen Verbund eingehen.

WO 90/09902 A1 offenbart ein Öffnungselement einer Fahrzeugkarosserie umfassend eine Platte gebildet aus einem metallischen Teil und einem Kunststoffteil das Verstärkungsrippen aufweist und auf das metallische Teil aufgeformt ist wobei das metallische Teil eine Ringform aufweist und einen Querschnitt in U-Form besitzt in dessen Innenraum die Rippen des Kunststoffteils angeformt sind.

Aus WO 92/12871 A1 ist eine Verstärkungsstruktur für eine Fahrzeugtür bekannt wobei die Verstärkungsstruktur ein Paar Rohre aufweist, die seitlich so voneinander beabstandet sind, dass bei einem seitlichen Aufprall auf die Tür ein Rohr vor dem anderen verformt wird.

WO 97/45283 A1 beschreibt ein Türmodul für ein Kraftfahrzeug wobei der Türaufbau eine Türverkleidung mit einer inneren Seite und einer äußeren Seite aufweist undi die innere Seite in der Weise ausgeführt ist um in ein Personenabteil eines Kraftfahrzeugs gerichtet zu sein, eine Verriegelung die an der Außenseite der Türverkleidung angebracht ist und betätigt werden kann um den Türaufbau lösbar in einer geschlossenen Stellung zu befestigen und ein Schloss, das an der Außenseite der Türverkleidung angebracht ist und mit der Verriegelung in Eingriff steht um selektive Betätigung der Verriegelung zu ermöglichen.

EP 0 992 380 A1 beschreibt eine Kraftfahrzeugtür deren Tragrahmen aus einem unteren Kunststoffteil das die Aufnahme für die Einrichtungen der Tür selbst bildet und aus einem hohlen oberen Metallteil das als Fensterlaufkanal dient besteht, wobei die zwei Teile mittels Verbundspritzen miteinander vereint sind.

WO 2007/111782 A1 beschreibt ein Türmodul aus einem Körper der zwei Seiten hat wobei die Verstärkungskomponente auf der einen Seite des Körpers und ein Scheibenlaufkanal mit offenem Profil auf der zweiten Seite des Körpers angebracht sind und dem Körper weitere Komponenten durch Spritzguss hinzugefügt werden können.

Aus ATZ 11/2005, Jahrgang 107, 1010-1016 "Polycarbonat und seine Blends für Karosseriebauteile" ist der Einsatz von Polycarbonat im Mehrkomponentenspritzguss zur Herstellung von u.a. einer Heckklappe mit Hybridträgerstruktur bekannt.

DE 103 01 520 A1 beschreibt ein Kunststoff-Metall-Verbundbauteil aus wenigstens zwei metallischen Formteilen, die in Überlappungsbereichen der Formteile mit einem Klebstoff einen Stoffschluss bilden und zusätzlich durch angespritzten thermoplastischen Kunststoff miteinander verbunden sind, wobei die Formteile keinen direkten Kontakt miteinander haben und der Klebstoff eine elektrisch isolierende Schicht zwischen den Formteilen bildet.

EP 1 187 734 A1 betrifft eine Fahrzeugtür mit einem Türkasten sowie ein Verfahren zur Herstellung einer solchen Tür, wobei an dem Türinnenblech auf der der Türaußenhaut zugewandten Seite ein Kunststoffträgerteil angespritzt wird.

All den im Stand der Technik beschriebenen Lösungen in Bezug auf Kraftfahrzeug Türstrukturmodulen ist gemeinsam, dass den metallischen Elementen bzw. Blechen oder Blechprofilen nur eine Kunststoffkomponente hinzugefügt wird.

Die Folge einer solchen Bauweise: bei anforderungsgerechter Auslegung wird der Kunststoff nach dessen Blastungslimit ausgewählt. Hoch belastete Kunststoffstrukturen werden z.B. mit höherem Glasfasergehalt verstärkt, d.h. es wird Kunststoff mit höherer Dichte verwendet. Dabei werden aber auch geringer oder mechanisch nicht belastete Kunststoffbereiche/-Geometrien mit diesem hoch belastbarem Kunststoff dargestellt. Das führt wegen der höheren Dichte/Glasfasergehalt zu nicht gewichtsoptimalen Konstruktionen und auch zu höheren Material- bzw. Bauteilkosten.

Nachteilig an den im Stand der Technik beschriebenen Kraftfahrzeug-Türstrukturmodulen ist zudem die Tatsache, dass im Falle verschiedener zu erfüllender Funktionen Funktionselemente mit ein und demselben Kunststoff an das Türstrukturmodul angespritzt werden. Beispielsweise in WO 2007/111782 A1 dient ein und derselbe Kunststoff Polypropylen dazu den Körper aber auch eventuelle Komponenten wie Luftkanäle, Fenstermotorhalterung, Kartentasche, Lautsprecherfassung etc. zu formen sowie deren Anbindung an den Grundkörper sicherzustellen. Ein und derselbe Kunststoff übernimmt dabei sowohl Funktionen die unter Last stehen als auch Funktionen, die während des Betriebes eines Fahrzeugs keiner Belastung ausgesetzt sind.

Eine Möglichkeit das Einwirken verschiedener Lasten auf ein Bauteil zu berücksichtigen ist der Einsatz der Mehrkomponententechnik. In der Mehrkomponententechnik unterscheidet man zwischen
- Bi-Injektion, also ein zeitgleiches Einspritzen zweier oder mehrerer Komponenten in dieselbe Kavität während des Spritzgusses (siehe Handbuch Spritzgießen, Friedrich Johannaber, Walter Michaeli, Carl Hanser Verlag 2004, insbesondere Kapitel 6.5, Seiten 488-491)
- Core-Back-Verfahren, also das Einspritzen zweier oder mehrere Komponenten in Folge, wobei der Hohlraum für die 2. Komponente durch Ziehen eines Sperrschiebers freigestellt wird.
- Umsetz-Verfahren, also mit einem Vorspritzling der in eine 2. Kavität oder 2. Maschine umgesetzt wird bevor die 2. Komponente eingespritzt wird.
- Sandwich-Verfahren, also dem Schichtaufbau mit Außenhaut / Kern, wobei die Schichten nacheinander eingespritzt werden.

Die Aufgabe der vorliegenden Erfindung bestand deshalb darin, gegenüber dem oben zitierten Stand der Technik zu einer weiteren Gewichtsreduktion und Kostenreduktion zu kommen. Gleichzeitig sollen sowohl die Steifigkeitseigenschaften als auch das Crashverhalten beibehalten, wenn nicht sogar verbessert werden.

Die Steifigkeitsanforderungen betreffen insbesondere Türüberdrückung, Tür-Torsion, Türabsenkung, Biegung; die Crashanforderung betrifft insbesondere den Frontcrash und den Seitenaufprall, wobei die maximale Verformung nicht überschritten werden darf und die Struktur einer vorgegebenen maximalen Last standhalten muss bevor eine bleibende Verformung eintritt.

Die Lösung der Aufgabe und somit der Gegenstand der vorliegenden Erfindung ist ein Türstrukturmodul, bevorzugt ein Türstrukturmodul für ein Kraftfahrzeug, besonders bevorzugt eine Kraftfahrzeugtür oder eine Kraftfahrzeugheckklappe in Metall-Kunststoff Verbundbauweise (Hybridtechnik) indem wenigstens ein Blechprofil mit wenigstens zwei verschiedenen Kunststoffelementen zusammengefügt wird wobei die beiden Kunststoffelemente aus unterschiedlichen Kunststoffmaterialien bestehen die nach dem Bi-Injektionsverfahren zeitgleich verspritzt werden wodurch deren Schmelzefronten beim Aufeinandertreffen miteinander verschmelzen und gleichzeitig mit dem Blechprofil oder den Blechprofilen einen festen Verbund eingehen. Das Türstrukturmodul stellt bevorzugt ein rahmenförmiges oder ringförmiges Strukturelement dar.

In einer bevorzugten Ausführungsform betrifft die vorliegende Erfindung ein Kraftfahrzeug-Türstrukturmodul in Kunststoff-Metall-Hybridbauweise umfassend wenigstens einen Grundkörper aus wenigstens einem Blechprofil, bevorzugt aus Metall oder aus einem hochfesten Kunststoffmaterial, der bereichsweise mit Kunststoff umgeben ist und als rahmenförmiges oder ringförmiges Strukturelement die Schamierbereiche mit dem Schlossbereich verbindet dadurch gekennzeichnet, dass über den Einsatz wenigstens zweier verschiedener Kunststoffe zudem Anbindungselemente für Funktionselemente angespritzt werden und die verschiedenen Kunststoffmaterialien den verschiedenen Kunststoffteilen einen festen Verbund miteinander ermöglichen indem die verschiedenen Kunststoffinaterialien bzw. deren Schmelzefronten beim Aufeinandertreffen im Bi-Injektionsverfahren miteinander verschmelzen und gleichzeitig mit dem Blechprofil oder den Blechprofilen einen festen Verbund eingehen.

Erfindungsgemäß wird unter Bi-Injektion nur das zeitgleiche Einspritzen wenigstens zweier Kunststoffkomponenten verstanden. Eindeutiges Merkmal ist hierbei, dass beide bzw. alle Schmelzefronten der zu verspritzenden Kunststoffe beim Aufeinandertreffen nicht erstarrt sind und nicht durch formtechnische Gegebenheiten, beispielsweise durch Schieber oder Werkzeugkerne, in ihrer Ausbreitung begrenzt werden.

Überraschenderweise zeigen die erfindungsgemäß hergestellten Türstrukturmodule, hergestellt durch zeitgleiches Einspritzen der Kunststoffkomponenten nach dem Bi- Injektionsverfahren, eine Festigkeit der Zusammenfließzone beider bzw. aller Kunststoffe in zumindest der Höhe der Bindenahtfestigkeit eines konventionellen Ein-Kunststoff-Komponenten-Bauteils.

Die Verbundfestigkeiten sind deutlich fester als aufgrund des Standes der Technik zu erwarten war und zudem ist der Werkzeugaufbau vereinfacht, weil keine separat zu betätigenden Schieber oder Werkzeugkerne benötigt werden. Vielmehr erhält man eine "Kontaktzone" der Kunststoffkomponenten, die nicht formtechnisch exakt begrenzt wird, sondern über die Angusspositionierung der unterschiedlichen Komponenten zueinander und die Prozessparameter bestimmt wird. Beide Spritzaggregate können z.B. unterschiedlich schnell oder auch zeitversetzt einspritzen um mehr von der einen oder mehr von der anderen Komponente einzuspritzen und dadurch die "Kontaktzone" gezielt zu verschieben. Dabei treffen die Schmelzefronten im schmelzeförmigem Zustand aufeinander.

Die Blechprofile im Sinne der vorliegenden Anmeldung sind bevorzugt Strukturelemente aus den Metallen Stahl, Aluminium oder Magnesium.

Erfindungsgemäß umfasst der Begriff Blechprofil aber auch die Begriffe Blecheinleger oder einfach nur Blech(e).

Erfindungsgemäß umfasst der Begriff Blechprofile aber in einer alternativen bevorzugten Ausführungsform auch hochfeste Kunststoffmaterialien, sogenannte Organobleche. Organobleche sind zunächst plattenförmige Halbzeuge aus faserverstärktem Kunststoff, die durch ein formgebendes Werkzeug zu einem Organoblechprofil verarbeitet werden. Beispielhaft werden erfindungsgemäß einzusetzende Organobleche sowie ein Verfahren zu deren Herstellung in DE 10 2006 013 685 A1 oder in DE 10 2004 060 009 A1 beschrieben.

Überraschenderweise erfüllt das erfindungsgemäße Türstrukturmodul in Metall-Mehrkomponemten Kunststoff-Verbundbauweise die Steifigkeitsanforderungen als auch die Crashanforderungen bei einer Gewichtseinsparung zwischen 10% und 33%

In einer bevorzugten Ausführungsform beinhaltet das im Spritzgussvorgang erzeugte Türstrukturmodul Verstärkungsrippen aus einem der wenigstens zwei zu verwendenden verschiedenen Kunststoffe. Diese Verstärkungsrippen befinden sich bevorzugt in den Verschraubungsbereichen der Türschamiere (im rahmenförmigen Strukturelement), in den Übergangsbereichen (vorne und hinten) vom rahmenförmigen Strukturelement zu den Schachtleisten sowie im Bereich der Anbindungspositionen des Seitenaufprallträgers zum rahmenförmigen Strukturelement (vorne und hinten). Ebenso werden der Antrieb und die Umlenkrollen des Fensterhebers sowie die Türinnengriffe durch Verstärkungsrippen fest im Türstrukturmodul verankert.

In einer weiteren bevorzugten Ausfühungsform befinden sich auch in den nicht benannten Bereichen im rahmenförmigen Strukturelement, in den Schachtleisten und im Seitenaufprallträger weitere Stützrippen aus einem zweiten, bevorzugt weniger hoch belastbaren Kunststoff, die aufgrund ihrer Stützfunktion aus einem Kunststoff mit geringerer Festigkeit ausgeführt werden und dadurch das dünnwandige Blech gegen frühzeitiges Kollabieren/Einknicken unter Last abstützen.

Die Verstärkungs- und Stützrippen wiederum sind bevorzugt an diskreten Verbindungsstellen über Durchbrüche im Blechprofil, durch welche der Kunststoff hindurch und über die Flächen der Durchbrüche hinausreicht, mit diesem fest verbunden.

In einer bevorzugten Ausführungsform besteht das Türstrukturmodul aus einer Metallplatte in Form eines Rings und eines angeformten Kunststoffteils. Beides zusammen bilden ein Element der Innenstruktur der Türstrukturmoduls, wobei das Kunststoffteils sowohl die innere Ausgestaltung und Verarbeitung des Öffnungselements sicherstellt als auch die Anbindung von Funktionselementen über entsprechend gleichzeitig mit angespritzte Funktionsvorrichtungen erlaubt. Diese Konzeption ermöglicht eine in der Struktur homogene Anordnung, eine perfekte Dichtheit sowie gleichzeitig die Möglichkeit eine oder mehrere Funktionen zusätzlich zu übernehmen.

Die Erfindung betrifft bevorzugt ein Türstrukturmodul mit einer Platte, die aus einem metallischen Teil und einem Kunststoffteil gebildet ist, das Versteifungen aufweist und an dem metallischen Teil angeformt ist, dadurch gekennzeichnet, dass das metallische Teil und das Kunststoffteil ein inneres Strukturelement des Türstrukturmoduls bilden wobei eine äußere Platte auf diesem inneren Strukturelement angebracht ist, dass das metallische Teil eine Ringform aufweist, die eine Öffnung begrenzt und von U-Querschnittsform ist, in dessen Innerem die Versteifungsrippen angeformt sind, wobei diese Rippen durch Ankerungspunkte zurückgehalten werden, die auf dem metallischen Teil vorgesehen sind und dass das Kunststoffteil eine Platte aufweist, die die Öffnung des metallischen Teils schließt, durch das es von der Innenseite des Öffnungselements sichtbar ist.

Gemäß einer bevorzugten Ausführungsform hat das metallische Teil die Form eines rechtwinkligen Trapezes, das einen inneren Arm aufweist, der den rechten Winkel in der Nähe der großen Basis mit der gegenüberliegenden Seite verbindet.

Gemäß einer weiteren erfindungsgemäß bevorzugten Eigenschaft ist eine Innengarnitur aus thermoplastischem Material auf das Kunststoffteil aufgeschweißt, die dazu dient, die Formen des metallischen Teils zu überdecken.

Weitere Eigenschaften und Vorteile ergeben sich aus der deataillierten Beschreibung zu den nachfolgenden Figuren die ausschließlich beispielhaft sind.

In einer bevorzugten Ausführungsform der vorliegenden Erfindung ist das für das Türstrukturmodul eingesetzte Blechprofil und/oder das metallische Teil mit Haftvermittler oder Klebstoff beschichtet. Erfindungsgemäß einzusetzende Haftvermittler werden in DE 10 2006 025 745 A1 offenbart, deren Inhalt diesbezüglich von der vorliegenden Anmeldung vollumfänglich mit umfasst wird. Der Haftvermittler oder Klebstoff ist vorzugsweise ein zweistufiger Haftvermittler, der in zwei aufeinander folgenden Schritten, vorzugsweise durch thermische Aktivierung vollständig vernetzt. Der Haftvermittler oder Klebstoff kann auf das Blechprofil bzw. Metallmaterial vor dem Stanzen und/oder Formgeben, etc. aufgebracht werden. Ein solcher Auftrag erfolgt vorzugsweise im sogenannten Coil-Coating-Verfahren auf das Blechprofil vor dessen Bearbeitung. Dieses Verfahren ist besonders kosteneffizient. Der Haftvermittler oder Klebstoff kann aber auch durch Spritzen, Tauchen, Pulverspritzen, etc. aufgebracht werden. Nach dem Aufbringen auf das Blechprofil und/oder Metallrohr wird er in einem ersten Schritt teilvernetzt, so dass sich eine "staubtrockene Oberfläche" ausbildet, die ausreichend resistent gegen Handlings-Beschädigungen ist. Beim oder nach dem Kunststoffanspritzen wird der Haftvermittler oder Klebstoff vollständig vernetzt, so dass er seine endgültigen Eigenschaften erhält. Um die nötige Aktivierungsenergie für die zweite Phase des Vernetzers des Haftvermittlers zu erreichen, kann es günstig sein, das Kunststoffwerkzeug zu erwärmen und/oder das Einlegeblechprofil bzw. den metallenen Grundkörper, bevorzugt das Metallrohr, zu erwärmen und/oder das Kunststoffmaterial bei einer ausreichend hohen Temperatur in das Spritzgusswerkzeug einzuspritzen, um die Vernetzung zu bewirken. Alternativ ist es möglich, durch ein Tempern nach dem Anspritzen vollständiges Vernetzen zu erreichen.

Der Haftvermittler oder Klebstoff, der für die stoffschlüssige Anbindung zwischen Kunststoff und metallischem Teil sorgt, ist bevorzugt ein Polyurethansystem oder ein Epoxidsystem, besonders bevorzugt ein auf Bisphenol A und/oder Bisphenol B und/oder Bisphenol C und/oder Bisphenol F basierendes Epoxidharz.

Bevorzugte Haftvermittlersysteme oder Klebstoffe für die erfindungsgemäß einzusetzenden Kunststoffmaterialien basieren auf Elastomer-modifizierten Epoxidklebstoffen, insbesondere mit kovalenter Anbindung durch Einpolymerisation von 1,3-Butadienen und/oder physikalischer Einbindung durch Zugabe von Kautschuk.

In einer alternativen, bevorzugten Ausführungsform wird das Blechprofil erst nach dem Umspritzen in einem separaten Prozessschritt durch Nieten, Heißnieten, Clinchen, Kleben oder Schrauben mit der Kunststoffstruktur des metallischen Teils zusätzlich zu seinem ohnehin durch den Spritzvorgang erfolgten Verbund verbunden.

Das erfindungsgemäße Türstrukturmodul weist wenigstens eine aus einem Kunststoff angeformte Aufnahme oder wenigstens ein Anbindungselement für Funktionselemente auf. Erfindungsgemäß bevorzugt durch Spritzguss vorzusehende Anbindungselemente dienen zur Halterung von Funktionselementen der Reihe Türinnengriff, Türöffner, Türschloss, Fensterhebermotor, Kartentaschen, Belüftungskanäle, Bedieneinheit für Fensterheber und Spiegelverstellung, Halter für Außenspiegel/Spiegeldreieck, Türinnenverkleidung, Befestigung der Außenbeplankung, Seitenaufprallträger, Seitenairbag , Knieprotektoren, Aufnahmen für Lautsprecher. Die genannten Funktionselemente sind nur einige Beispiele aufgeführt. Bei allen genannten Aufnahmen bzw. Anbindungselementen, die alternativ oder in beliebiger Kombination miteinander am Türstrukturmodul einstückig angeformt sein können, wird die Montage diverser Cockpitkomponenten erleichtert. Erfindungsgemäß werden diese jedoch aus einem anderen Kunststoff geformt als jener Kunststoff, wie er für die Rippenverstärkung einzusetzen ist. Auch untereinander können die verschiedenen Funktionselemente erfindungsgemäß aus verschiedenen Kunststoffen hergestellt werden.

Weitere funktionale Eigenschaften und Vorteile ergeben sich aus der detaillierten Beschreibung zu den Figuren die ausschließlich beispielhaft sind.

Zur Erzielung der Rippenstruktur sowie der Erzielung von Anbindungselementen werden als Kunststoffe thermoplastische Polymere, bevorzugt in Form von Polymer-Formmassen eingesetzt.

Erfindungsgemäß werden wenigstens zwei verschiedene Kunststoffe gleichzeitig durch Spritzguss sowohl mit dem Grundkörper als auch miteinander nach dem Bi-Injektionsverfahren fest verbunden. Dem Fachmann ist das Bi-Injektionsverfahren bekannt. Beispielhaft für den Einsatz des Bi-Injektionsverfahrens im Automobilbau sei auf die WO 2006/003 325 A1 verwiesen.

In den weiteren Ausführungen wird der Anschaulichkeit halber von zwei thermoplastischen Kunststoffen ausgegangen, was nicht ausschließt, dass die vorliegende Erfindung die Kombination durchaus mehrerer Kunststoffe miteinander umfasst.

Bevorzugt betrifft die vorliegende Erfindung ein Türstrukturmodul, bei dem die Verschmelzung der beiden Kunststoffe während des Bi-Injektionsverfahrens innerhalb derselben Kavität, wo sie aufeinander treffen, erfolgt.

Als zu verspritzende Kunststoffe werden bevorzugt themoplastische Polymere, besonders bevorzugt thermoplastische Polymere aus der Reihe Polyamid, Polyester, Polypropylen oder mögliche Mischungen der genannten Polymere ausgewählt.

Mehrere Kunststoffe oder unterschiedliche Kunststoffe im Sinne der vorliegenden Erfindung bedeuten wenigstens zwei verschiedene Kunststoffe, wobei als verschiedene Kunststoffe Polymere der oben genannten Reihe aber auch Kunststoffe auf Basis desselben Polymers jedoch mit unterschiedlichem Füllstoffanteil und/oder Verstärkungsstoffanteil zu verstehen sind.

Verfahren zur Herstellung der erfindungsgemäß einzusetzenden thermoplastischen Kunststoffe sind dem Fachmann bekannt. Die zu erzielenden Effekte zeigen sich ebenso bei allen aus dem oben zitierten Stand der Technik bekannten Variationen des Einsatzes der Hybridtechnologie, sei es dass der Kunststoffteil das Metallteil vollständig umhüllt, oder wie im Fall der EP 1 380 493 A2 nur umgurtet, sei es dass das Kunststoffteil nachträglich eingeklebt oder mit beispielsweise einem Laser mit dem Metallteil verbunden wird oder Kunststoffteil und Metallteil wie in WO 2004/071741 in einem zusätzlichen Arbeitsschritt den festen Formschluss erhalten.

Verschiedene thermoplastische Kunststoffe im Sinne der vorliegenden Erfindung sind nicht nur Kunststoffe die aufgrund ihres chemischen Aufbaus verschieden sind, sondern auch Kunststoffe auf Basis desselben Polymers, wovon einer einen geringeren, der andere einen höheren Füllstoffanteil oder Verstärkungsstoffanteil aufweist.

In einer Ausführungsvariante betrifft die vorliegende Erfindung deshalb auch Türträgermodule der oben beschriebenen Weise, wobei das Kunststoffmaterial des ersten Kunststoffteiles sich vom Kunststoff des zweiten Kunststoffteiles durch den Anteil an Füllstoffen und/oder Verstärkungsstoffen unterscheidet. Erfindungsgemäß kann aber jedes der oben genannten Polymere mit Füll- und/oder Verstärkungsstoffen versehen werden.

In jedem Fall ist die Menge an Füllstoff bei Einsatz desselben Polymers in den zu verwendenden Kunststoffen verschieden. Sie kann aber bei Einsatz verschiedener Polymere in den beiden Kunststoffen durchaus zu gleichen Anteilen vorliegen.

Im Falle, dass in beiden Kunststoffen derselbe thermoplastische Kunststoff eingesetzt wird, beträgt der Unterschied im Füllstoffgehalt beider thermoplastischer Kunststoffe 0 :70 bis 70 : 0, bevorzugt 15 : 65 bis 65 : 15, besonders bevorzugt 30:60 bis 60 : 30 Gew.-Teile.

Erfindungsgemäß bevorzugt einzusetzende Polyamide sind teilkristalline Polyamide (PA), die ausgehend von Diaminen und Dicarbonsäuren und/oder Lactamen mit wenigstens 5 Ringgliedern oder entsprechenden Aminosäuren hergestellt werden können. Als Edukte kommen dafür aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bis-aminomethyl-cyclohexan, Phenylendiamine, Xylylendiamine, Aminocarbonsäuren wie z.B. Aminocapronsäure, bzw. die entsprechenden Lactame in Betracht. Copolyamide aus mehreren der genannten Monomeren sind eingeschlossen.

Erfindungsgemäß bevorzugte Polyamide werden aus Caprolactamen, ganz besonders bevorzugt aus ε-Caprolactam sowie die meisten auf PA6, PA66 und auf anderen aliphatischen und/oder aromatischen Polyamiden bzw. Copolyamiden basierenden Compounds, bei denen auf eine Polyamidgruppe in der Polymerkette 3 bis 11 Methylengruppen kommen, hergestellt.

Erfindungsgemäß einzusetzende teilkristalline Polyamide können auch im Gemisch mit anderen Polyamiden und/oder weiteren Polymeren eingesetzt werden.

Den Polyamiden können übliche Additive, bevorzugt Entformungsmittel, Stabilisatoren und/oder Fließhilfsmittel, in der Schmelze zugemischt oder auf der Oberfläche aufgebracht werden.

Erfindungsgemäß ebenfalls bevorzugt einzusetzende Polyester sind Polyester auf Basis von aromatischen Dicarbonsäuren und einer aliphatischen oder aromatischen Dihydroxyverbindung.

Eine erste Gruppe bevorzugter Polyester sind Polyalkylenterephthalate, insbesondere solche mit 2 bis 10 C-Atomen im Alkoholteil.

Derartige Polyalkylenterephthalate sind in der Literatur beschrieben. Sie enthalten einen aromatischen Ring in der Hauptkette, der von der aromatischen Dicarbonsäure stammt. Der aromatische Ring kann auch substituiert sein, bevorzugt durch Halogen, insbesondere Chlor und Brom, oder durch C₁-C₄-Alkylgruppen, insbesondere Methyl, Ethyl-, i- bzw. n-Propyl- und n-, i- bzw. t-Butylgruppen.

Diese Polyalkylenterephthalate können durch Umsetzung von aromatischen Dicarbonsäuren, deren Ester oder anderen esterbildenden Derivaten mit aliphatischen Dihydroxyverbindungen in bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbon-Säuren ersetzt werden.

Von den aliphatischen Dihydroxyverbindungen werden Diole mit 2 bis 6 Kohlenstoffatomen, insbesondere 1,2-Ethandiol, 1,3-Prapandiol, 1,4-Butadiol, 1,6-Hexandiol, 1,4-Hexandiol, 1,4-Cyclohexandiol, 1,4-Cyclohexandimethanol und Neopentylglykol oder deren Mischungen bevorzugt.

Als insbesondere besonders bevorzugt einzusetzende Polyester sind Polyalkylenterephthalate, die sich von Alkandiolen mit 2 bis 6 C-Atomen ableiten, zu nennen. Von diesen werden insbesondere Polyethylenterephthalat (PET), Polypropylenterephthalat und Polybutylenterephthalat (PBT) oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-pentandiol als weitere Monomereinheiten enthalten.

Die Viskositätszahl der erfindungsgemäß bevorzugt einzusetzenden Polyester liegt im Allgemeinen im Bereich von 50 bis 220, vorzugsweise von 8 bis 160 (gemessen in einer 0,5 gew.-%igen Lösung in einem Phenol/o-Dichlorbenzolgemisch (Gew.-Verh. 1: 1 bei 25°C) gemäß ISO 1628.

Insbesondere bevorzugt sind Polyester, deren Carboxyl-Endgruppengehalt bis zu 100 mval/kg, bevorzugt bis zu 50 mval/kg und insbesondere bevorzugt bis zu 40 mval/kg Polyester beträgt. Derartige Polyester können beispielsweise nach dem Verfahren der DE-A 44 01 055 hergestellt werden. Der Carboxyl-Endgruppengehalt wird üblicherweise durch Titrationsverfahren (z.B. Potentiometrie) bestimmt.

Im Falle des Einsatzes von Polyestermischungen enthalten die Formmassen eine Mischung aus Polyestern, also zusätzlich Polyester die verschieden von PBT sind, wie beispielsweise Polyethylenterephthalat (PET).

Weiterhin ist es vorteilhaft Rezyklate wie beispielsweise PA-Rezyklate oder PET-Rezyklate (auch scrap-PET genannt) gegebenenfalls in Mischung mit Polyalkylenterephthalaten wie PBT einzusetzen.

Unter Rezyklaten versteht man im Allgemeinen:
1) sogenannte Post Industrial Rezyklate: hierbei handelt es sich um Produktionsabfalle bei der Polykondensation oder bei der Verarbeitung anfallende Angüsse bei der Spritzgussverarbeitung, Anfahrware bei der Spritzgussverarbeitung oder Extrusion oder Randabschnitte von extrudierten Platten oder Folien.
2) Post Consumer Rezyklate: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Rezyklat-Arten können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 10 mm, vorzugsweise kleiner 8 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise < 0,2 %, insbesondere < 0,05 %.

Als weitere Gruppe bevorzugt einzusetzender Polyester sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephtltalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel (I) 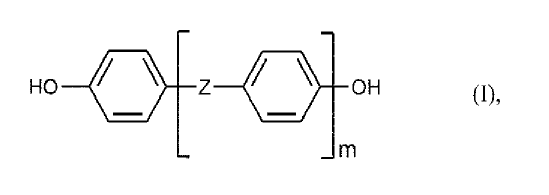 in der
Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der
m den Wert 0 bis 2 hat.

Die Verbindungen können an den Phenylengruppen auch C₁-C₆-Alkyl- oder Alkoxygruppen und Fluor, Chlor oder Brom als Substituenten tragen.

Als Stammkörper dieser Verbindungen seien beispielsweise Dihydroxydiphenyl, Di-(hydroxyphenyl)alkan, Di-(hydroxyphenyl)cycloalkan, Di-(hydroxyphenyl)sulfid, Di-(hydroxyphenyl)ether, Di-(hydroxyphenyl)keton, Di-(hydroxyphenyl)sulfoxid, α,α'-Di-(hydroxyphenyl)-dialkylbenzol, Di-(hydroxyphenyl)sulfon, Di-(hydroxybenzol)benzol, Resorcin und Hydrochinon sowie deren kernalkylierte oder kernhalogenierte Derivate genannt.

Von diesen werden 4,4'-Dihydroxydiphenyl, 2,4-Di-(4'-hydroxyphenyl)-2-methylbutan, α,α'-Di-(4-hydroxyphenyl)-p-diisopropylbenzol, 2,2-Di-(3'-methyl-4'-hydroxyphenyl)propan und 2,2-Di-(3'-chlor-4'-hydroxyphenyl)propan, sowie insbesondere 2,2-Di-(4'-hydroxyphenyl)propan, 2,2-Diphenon, 4,4'-Dihydroxydiphenylsulfon und 2,2-Di(3',5'-dimethyl4'-hydroxyphenyl)propan oder deren Mischungen bevorzugt.

Selbstverständlich kann man auch Mischungen von Polyalkylenterephthalaten und vollaromatischen Polyestern einsetzten. Diese enthalten im Allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind bekannt und in der Literatur, z.B. in der US-A 3 651 014, beschrieben. Auch im Handel sind entsprechende Produkte erhältlich, z.B. Hytrel^{®} (DuPont).

Als Polyester bevorzugt einzusetzende Materialien sollen erfindungsgemäß auch halogenfreie Polycarbonate verstanden werden. Geeignete halogenfreie Polcarbonate sind beispielsweise solche auf Basis von Diphenolen der allgemeinen Formel (II) 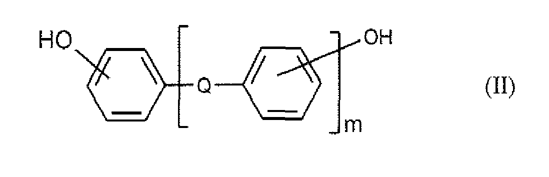 worin
Q eine Einfachbindung, eine C₁- bis C₈-Alkylen-, eine C₁- bis C₃-Alkyliden-, eine C₃- bis C₆-Cycloalkylidengruppe, eine C₆- bis C₁₂-Arylengruppe sowie -0-, -S- oder -SO₂- bedeutet und m eine ganze Zahl von 0 bis 2 ist.

Die Diphenole können an den Phenylenresten auch Substituenten wie C₁- bis C₆-Alkyl oder C₁- bis C₆-Alkoxy haben.

Bevorzugte Diphenole der Formel (II) sind Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1 -Bis-(4-hydroxyphenyl)-3,3,5-trimethylcyclohexan.

Sowohl Homopolycarbonate als auch Copolycarbonate sind geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, insbesondere solchen mit drei oder mehr als drei phenolischen OH-Gruppen.

Als besonders geeignet haben sich Polycarbonate erwiesen, die relative Viskositäten ηᵣₑₗ von 1,10 bis 1,50, insbesondere von 1,25 bis 1,40 aufweisen. Dies entspricht mittleren Molekulargewichten M_{w} (Gewichtsmittelwert) von 10 000 bis 200 000, vorzugsweise von 20 000 bis 80 000 g/mol.

Die Diphenole der allgemeinen Formel sind bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-t-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-Di-t-Butylphenol, p-t-Octylphenol, p-Dodecylphenol, 2-(3,5-Dimethyl-heptyl)-phenol und 4-(3,5-Dimethylheptyl)-phenol.

Halogenfreie Polycarbonate im Sinne der vorliegenden Erfindung bedeutet, dass die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halgoenfreie Polycarbonate im Sinne der vorliegenden Erfindung.

Als weitere thermoplastische Polymere seien amorphe Polyestercarbonate genannt, wobei Phosgen gegen aromatische Dicarbonsäureeinheiten wie Isopshthalsäure und/oder Terephthalsäureeinheiten, bei der Herstellung ersetzt wurde. Für nähere Einzelheiten sei an dieser Stelle auf die EP-A 0 711 810 verwiesen.

Weitere geeignete Copolycarbonate mit Cycloalkylresten als Monomereinheiten sind in der EP-A 0 365 916 beschrieben.

Weiterhin kann Bisphenol A durch Bisphenol TMC ersetzt werden. Derartige Polycarbonate sind unter dem Warenzeichen APEC HT^{®} der Firma Bayer AG erhältlich.

In einer weiteren bevorzugten Ausführungsform der vorliegenden Erfindung enthält wenigstens eine der zu verwendenden Polymere bzw. Polymer-Formmassen 0,001 bis 75 Gew.-Teile, vorzugsweise 10 bis 70 Gew.-Teile, besonders bevorzugt 20 bis 65 Gew.-Teile insbesondere bevorzugt 30-65 Gew.-Teile eines Füll- oder Verstärkungsstoffes.

Als Füllstoff oder Verstärkungsstoff können auch Mischungen aus zwei oder mehreren unterschiedlichen Füllstoffen und/oder Verstärkungsstoffen eingesetzt werden, bevorzugt auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Besonders bevorzugt werden mineralische teilchenformige Füllstoffe auf der Basis von Talk, Wollastonit, Kaolin und/oder Glasfasern, insbesondere besonders bevorzugt Glasfasern, eingesetzt.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Bevorzugt seien nadelförmige Wollastonite genannt, insbesondere bevorzugt nadelförmige Wollastonite die ein Länge : Durchmesser - Verhältnis von 2:1 bis 35:1, besonders bevorzugt von 3:1 bis 19:1, insbesondere bevorzugt von 4:1 bis 12:1 aufweisen. Die mittlere Teilchengröße der erfindungsgemäß einzusetzenden nadelförmigen Mineralien liegt bevorzugt bei kleiner 20 µm, besonders bevorzugt bei kleiner 15 µm, insbesondere bevorzugt bei kleiner 10 µm, bestimmt mit einem CILAS GRANULOMETER.

Der Füllstoff und/oder Verstärkungsstoff kann gegebenenfalls oberflächenmodifiziert sein, bevorzugt mit einem Haftvermittler bzw. Haftvermittlersystem insbesondere bevorzugt auf Silanbasis. Diese Vorbehandlung ist jedoch nicht unbedingt erforderlich. Insbesondere bei Verwendung von Glasfasern können aber zusätzlich zu Silanen auch Polymerdispersionen, Filmbildner, Verzweiger und/oder Glasfaserverarbeitungshilfsmittel verwendet werden.

Die erfindungsgemäß besonders bevorzugt einzusetzenden Glasfasern, die im Allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem z.B. auf Silanbasis ausgerüstet sein.

Gebräuchliche Haftvermittler auf Silanbasis für die Vorbehandlung sind Silanverbindungen, bevorzugt Silanverbindungen der allgemeine Formel (III)

(X-(CH₂)_{q})ₖ-Si-(O-CᵣH₂ᵣ₊₁)₄₋ₖ (III)

worin
X für NH₂-, HO- oder 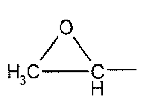 steht,
q für eine ganze Zahl von 2 bis 10, bevorzugt 3 bis 4 steht,
r für eine ganze Zahl von 1 bis 5, bevorzugt 1 bis 2 steht und
k für eine ganze Zahl von 1 bis 3, bevorzugt 1 steht.

Ferner bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. zum Formkörper in der Formmasse bzw. im Formkörper einen kleineren d97- bzw. d50-Wert aufweisen, als die ursprünglich eingesetzten Füllstoffe. Die Glasfasern können, bedingt durch die Verarbeitung zur Formmasse bzw. zum Formkörper, in der Formmasse bzw. im Formkörper kürzere Längenverteilungen als ursprünglich eingesetzt aufweisen.

Im Falle des Einsatzes verschiedener Kunststoffe können diese die Füllstoffe zu jeweils 0,001 bis 70 Gew.-Teilen, vorzugsweise 15 bis 65 Gew.-Teilen, besonders bevorzugt 30 bis 60 Gew.-Teilen, insbesondere bevorzugt 30-65 Gew.-Teilen einzeln oder im Gemisch mit anderen Füllstoffen/Verstärkungsstoffen enthalten.

In jedem Fall ist die Menge an Füllstoff bei Einsatz desselben Polymers in den zu verwendenden Kunststoffen verschieden. Sie kann aber bei Einsatz verschiedener Polymere in den beiden Kunststoffen durchaus zu gleichen Anteilen vorliegen.

Im Falle, dass in beiden Kunststoffen dasselbe thermoplastische Polymereingesetzt wird, beträgt der Unterschied im Füllstoffgehalt beider thermoplastischer Polymere 0 :70 bis 70 : 0, bevorzugt 15 : 65 bis 65 : 15, besonders bevorzugt 30:60 bis 60 : 30 Gew.-Teile.

Im Falle des Einsatzes verschiedener thermoplastischer Polymere als Kunststoff werden bevorzugt Kombinationen der Reihe PA-PBT, PA-PP, worin PA für Polyamid, PBT für Polybutylenterephthalat und PP für Polypropylen stehen, eingesetzt. In einer bevorzugten Ausführungsform betrifft die vorliegende Erfindung den Einsatz wenigstens zweier verschiedener thermoplastischer Polymere bei der Herstellung des Türstrukturmoduls.

In einer bevorzugten Ausführungsform können die zu verwendenden thermoplastischen Polymere wenigstens einen Compatibilizer enthalten, eine Materialkomponente, die es über einen physikalischen Vorgang gestattet, kritische Materialien wie beispielsweise Polypropylen mit Polyamid bzw. auch umgekehrt zu verbinden. Erfindungsgemäß bevorzugt zu verwendende Compatibilizer werden beispielsweise in DE 4 206 191 A1 oder US 6 541 571 B1 beschrieben.

Erfindungsgemäße Verfahren zur Herstellung von Erzeugnissen durch Spritzguß arbeiten bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

### Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Bauteil gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Die erfindungsgemäß einzusetzende Bi-Injektion ist die maschinen- und werkzeugtechnisch einfachste Variante des Zweikomponenten-Spritzgießens. Über zwei unabhängige Anspritzpunkte werden die beiden zu verspritzenden Komponenten in eine Kavität eingespritzt und treffen dort mehr oder weniger definiert zusammen. Mit Schließen des Werkzeugs beginnen beide Einheiten mit dem füllen der Kavität. Durch unterschiedliche Schneckengeschwindigkeiten kann die Lage der Kontaktzone, also die Stelle an der die Schmelzefronten der wenigstens zwei einzusetzenden Kunststoffkomponenten [cm³/s] aufeinander treffen, festgelegt werden. Bei der Angabe von gleichen Volumenströmen kann man auch eine symmetrische Formfüllung erzielen.

Zur Klarstellung sei angemerkt, dass vom Rahmen der Erfindung alle vorstehend aufgeführten, allgemeinen oder in Vorzugsbereichen genannten Definitionen und Parameter in beliebigen Kombinationen umfasst sind.

### Ausführungsbeispiel

### Kurze Beschreibung der Zeichnungen

Nachfolgend wird die Erfindung rein beispielhaft anhand der beigefügten Figuren beschrieben:

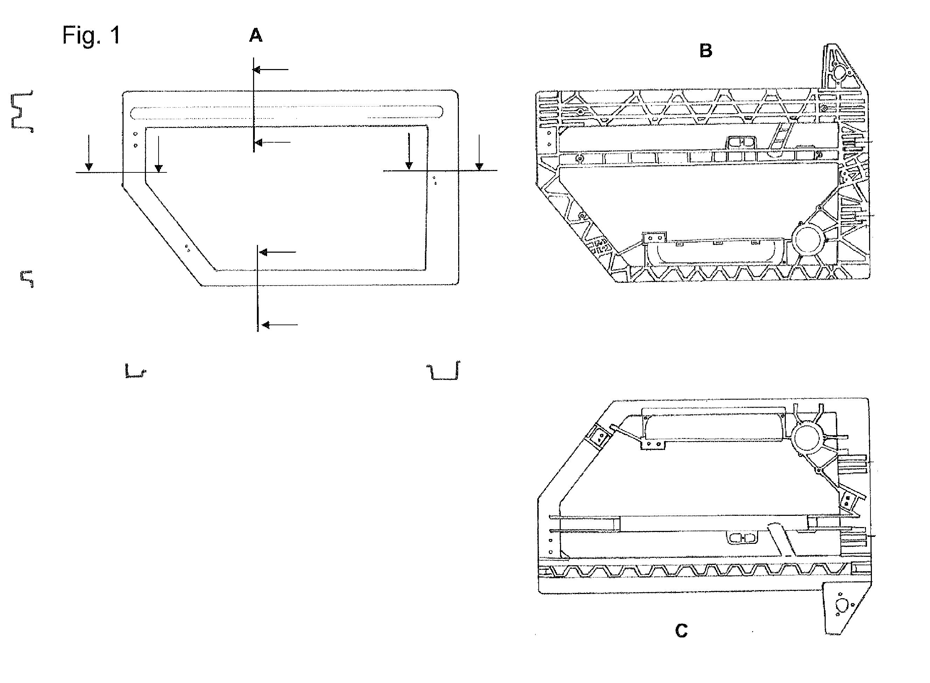

- **Fig. 1**: zeigt in A den zu umspritzenden Blecheinleger - mit entsprechenden Schnittdarstellungen und in B die Ansicht von außen und in C die Ansicht von innen für das fertig umspritzte Türstrukturmodul mit angespritzter Kunststoffverrippung.

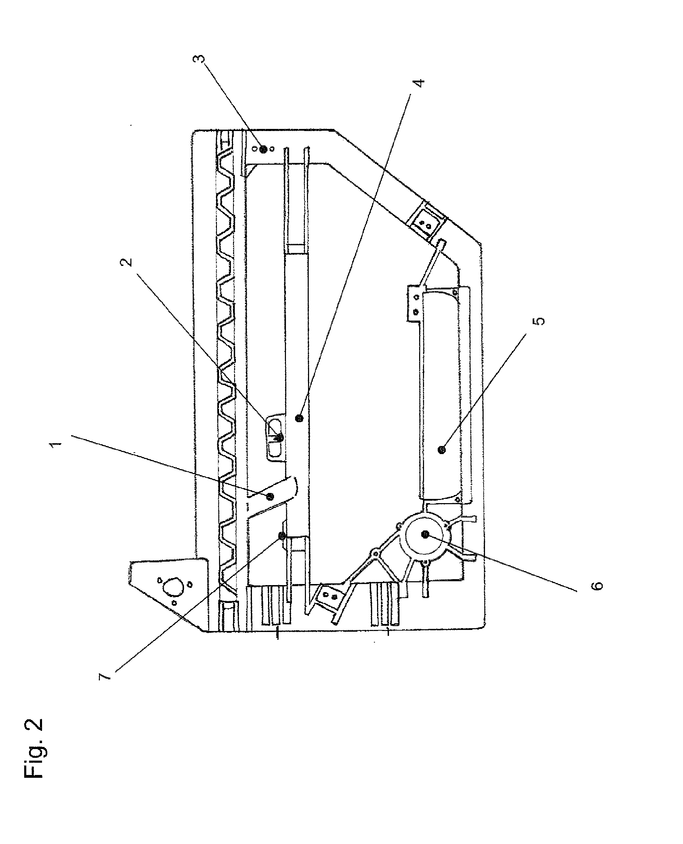

- **Fig. 2**: zeigt die Ansicht eines Fahrzeugs von innen ohne Anbauteile und Verkleidungsteile, jedoch mit vorgesehenen Positionen 1 für Türinnengriff, 2 für Türöffner, 3 für Befestigung Türschloss, 4 für Armauflage, 5 für Kartentasche/Türablagefach, 6 für Lautsprecheraufnahme und 7 für Bedieneinheit Fensterhebel und Spiegelverstellung.

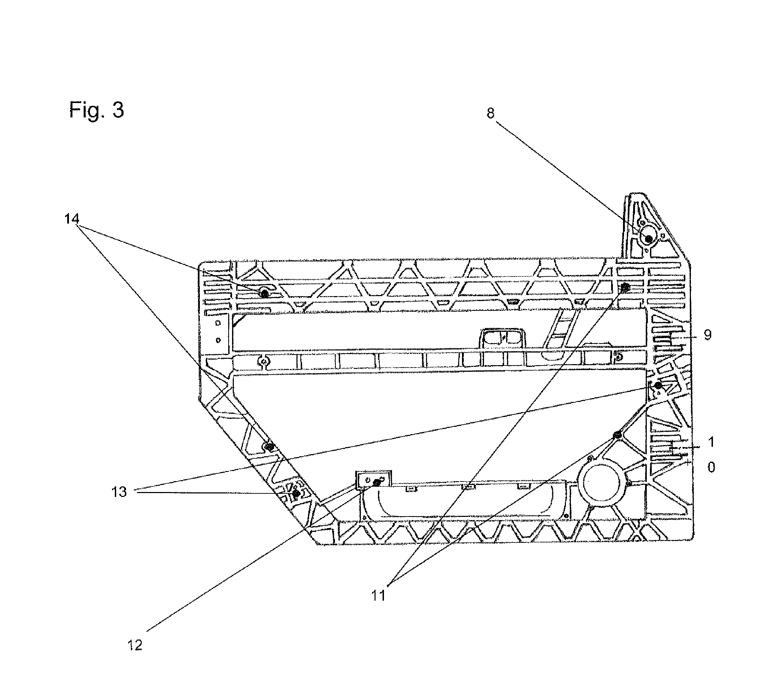

- **Fig. 3**: zeigt die Ansicht eines erfindungsgemäßen Türstrukturmoduls eines Fahrzeugs von außen.

Für die Anbauteile und zu befestigenden Funktionselemente sind entsprechende Haltevorrichtungen beim Spritzgießen bereits mit angeformt worden:
8 = Spiegeldreieck/Befestigung Außenspiegel
9 = Verstärkung/Verschraubung Türscharnier oben
10 = Verstärkung/Verschraubung Türscharnier unten
11 = Befestigung Fensterheberführung
12 = Aufnahme Fensterhebermotor
13 = Aufnahme Seitenaufprallträger
14 = Befestigung Fensterheberführung

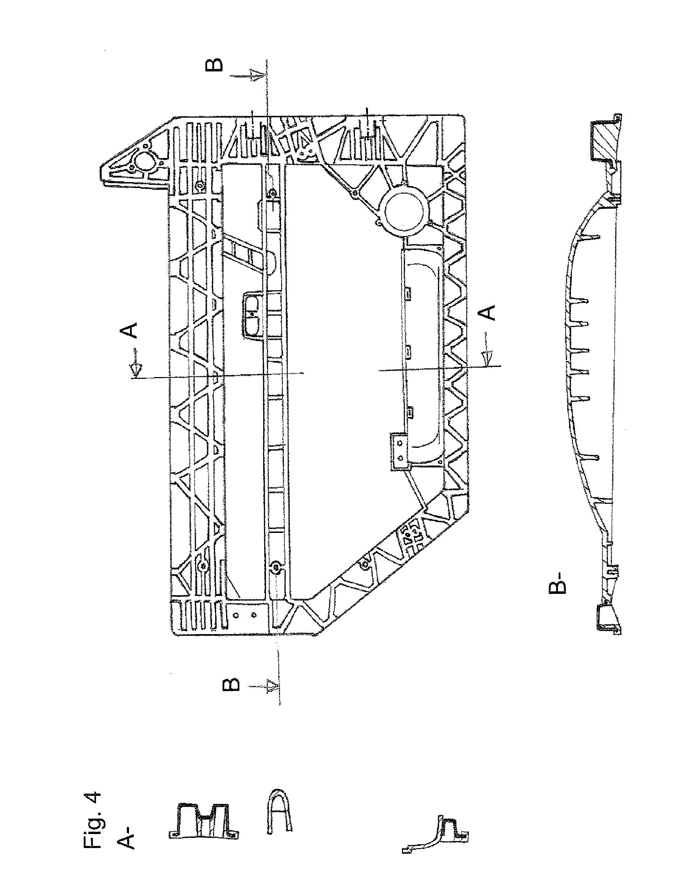

- **Fig. 4**: zeigt zwei Schnitte (A-A und B-B) durch das fertige Türstrukturmodul in der Ansicht von außen. Sowohl der mit angeformte Bereich der Kartentasche als auch die Armauflage und der Türzuziehgriff kommen bei geeigneter Oberflächennarbung ohne zusätzliche Verkleidungselemnte aus.

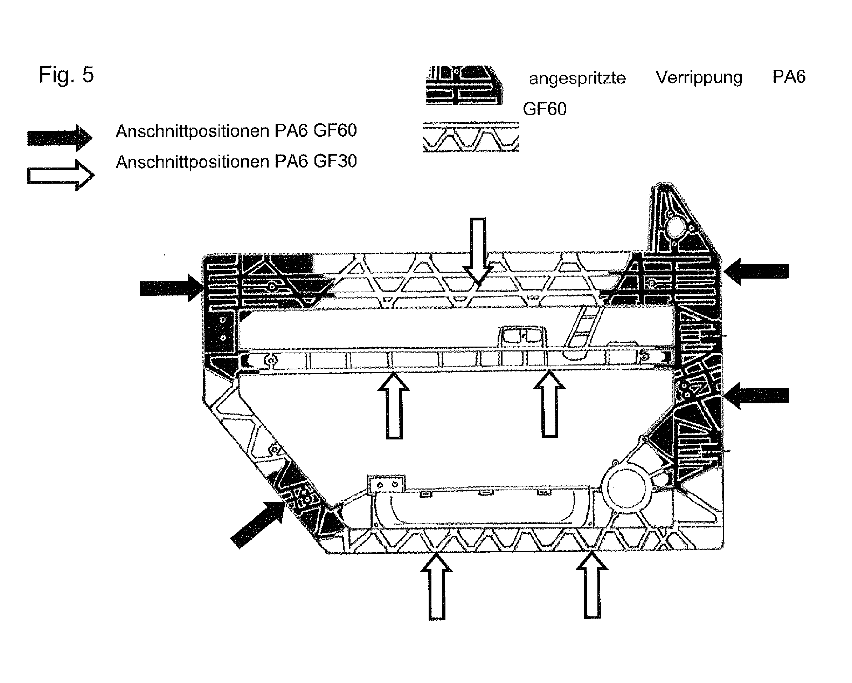

- **Fig. 5**: Die schwarzen Pfeile zeigen die Anschnittpositionen für das 60% Glasfaser verstärkte Polyamid 6. Die weißen Pfeile zeigen die Anschnittpositionen für das 30% Glasfaser verstärkte Polyamid 6.

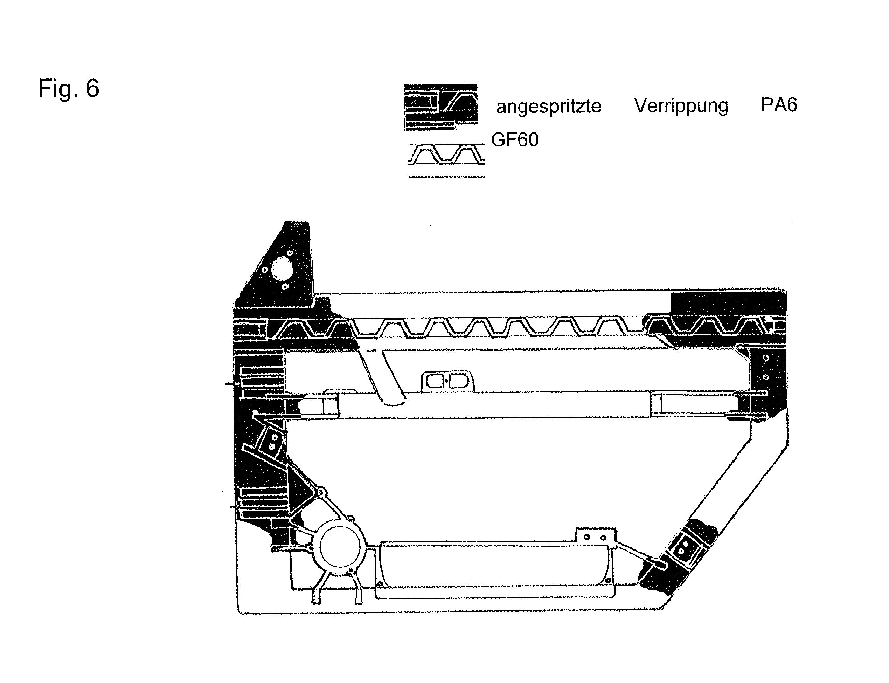

- **Fig. 5 und Fig 6**: Die schwarz hinterlegten Bereiche (mit weißen Konturstrichen) der Fig. 5 und der Fig. 6 kennzeichnen den Bereich des Blecheinlegers, an dem Verstärkungsrippen und Funktionselemente aus 60% Glasfaser verstärktem Polyamid 6 angespritzt worden sind. Dazu zählen

- die Verschraubungsbereiche der Türscharniere
- die Übergangsbereiche (vorne und hinten) vom rahmenformigen Strukturelement zu den Schachtleisten
- der Bereich der Anbindungspositionen des Seitenaufprallträgers zum rahmenförmigen Strukturelement (vorne und hinten)
- das Spiegeldreieck mit den Befestigungspositionen für den Außenspiegel
- die Aufnahme für das Türschloss

Die weiß hinterlegten Bereiche der Fig. 5 und Fig. 6 (mit schwarzen Konturstrichen) kennzeichnen den Bereich des Blecheinlegers, an dem Verstärkungsrippen und Funktionselemente, die aus 30% Glasfaser verstärktem Polyamid 6 angespritzt worden sind.

## Patentansprüche

1. Türstrukturmodul in Metall-Kunststaff Verbundbauweise (Hybridtechnik) indem wenigstens ein Blechprofil mit wenigstens zwei verschiedenen Kunststoffelementen zusammengefügt wird, **dadurch gekennzeichnet, dass** die beiden Kunststoffelemente aus unterschiedlichen Kunststoffmaterialien bestehen die nach dem Bi-Injektionsverfahren zeitgleich verspritzt werden wodurch deren Schmelzefronten beim Aufeinandertreffen miteinander verschmelzen und gleichzeitig mit dem Blechprofil oder den Blechprofilen einen festen Verbund eingehen.

2. Türstrukturmodul gemäß Anspruch 1, **dadurch gekennzeichnet, dass** dieses rahmenförmig oder ringförmig ist.

3. Türstrukturmodul gemäß Anspruch 1 oder 2, **dadurch gekennzeichnet, dass** die Kunststoffstruktur Verstärkungsrippen aufweist.

4. Türstrukturmodul gemäß Anspruch 3, **dadurch gekennzeichnet, dass** die Verstärkungsrippen an diskreten Verbindungsstellen ihrer Durchbrüche im Blechprofil, durch welche der Kunststoff hindurch und über die Flächen der Durchbrüche hinausreicht mit diesem fest verbunden sind.

5. Türstrukturmodul gemäß der Ansprüche 1 bis 4, **dadurch gekennzeichnet, dass** als Kunststoff thermoplastische Polymere eingesetzt werden.

6. Türstrukturmodul gemäß Anspruch 5, **dadurch gekennzeichnet, dass** thermoplastische Polymere aus der Reihe der Polyamide, Polyester oder Polypropylen oder mögliche Mischungen der genannten Polymere eingesetzt werden.

7. Türstrukturmodul gemäß der Ansprüche 5 oder 6, **dadurch gekennzeichnet, dass** wenigstens eines der thermoplastischen Polymere 0,001 bis 75 Gew.-Teile eines Füll- oder Verstärkungsstoffes enthält.

8. Türstrukturmodul nach einem der Ansprüche 1 bis 7, **dadurch gekennzeichnet, dass** das Blechprofil ein Organoblech ist.

9. Türstrukturmodul nach einem der Ansprüche 1 bis 8, **dadurch gekennzeichnet, dass** das Blechprofil und/oder der Grundkörper mit Haftvermittler oder Klebstoff beschichtet ist.

10. Türstrukturmodul nach einem der Ansprüche 1 bis 9, **dadurch gekennzeichnet, dass** das Blechprofil erst nach dem Umspritzen in einem separaten Prozessschritt durch Nieten, Heißnieten, Clinchen, Kleben oder Schrauben mit der Kunststoffstruktur zusätzlich zu seinem ohnehin durch den Spritzvorgang erfolgten Verbund verbunden wird.

11. Türstrukturmodul gemäß einem der Ansprüche 1 bis 10, **dadurch gekennzeichnet, dass** dieses wenigstens eine aus einem Kunststoff angeformte Aufnahme oder wenigstens ein Anbindungselement für Funktionselemente aufweist.

12. Verwendung eines Türstrukturmoduls gemäß einem der Ansprüche 1 bis 11 in Kraftfahrzeugen.
